# EUROPÄISCHE PATENTANMELDUNG

(11) **EP 3 153 696 A1**
(43) Veröffentlichungstag der Anmeldung: **12.04.2017**
(21) Anmeldenummer: 16183634.1
(22) Anmeldetag: 10.08.2016
(51) Int. Cl.: F02M 43/04, F02M 47/04, F02M 21/02, F02D 19/06, F02D 19/10

(54) **BRENNSTOFFEINSPRITZVENTIL ZUM EINSPRITZEN EINES GASFÖRMIGEN UND/ODER FLÜSSIGEN BRENNSTOFFS**

(30) Priorität: 07.10.2015 DE 102015219380
(71) Anmelder: ROBERT BOSCH GMBH, 70442 Stuttgart (DE)
(72) Erfinder: Stuke, Bernd, 71229 Leonberg (DE); Ohlhafer, Olaf, 74391 Erligheim (DE)

(57) **Zusammenfassung**

Die Erfindung betrifft ein Brennstoffeinspritzventil zum Einspritzen eines gasförmigen und/oder flüssigen Brennstoffs in einen Brennraum (1) einer Brennkraftmaschine, umfassend ein nadelförmiges erstes Einspritzventilglied (2), das zum Freigeben und Verschließen mindestens einer Einspritzöffnung (3), über die der flüssige Brennstoff einspritzbar ist, in einer Hochdruckbohrung (4) eines Düsenkörpers (5) hubbeweglich aufgenommen ist. Erfindungsgemäß ist zum Freigeben und Verschließen mindestens einer Einspritzöffnung (6), über die der gasförmige Brennstoff einspritzbar ist, ein hülsenförmiges zweites Einspritzventilglied (7) vorgesehen, das in einem Ringraum (8) eines Gehäuseteils (9) hubbeweglich aufgenommen ist, das den Düsenkörper (5) umgibt.

## Beschreibung

Die Erfindung betrifft ein Brennstoffeinspritzventil mit den Merkmalen des Oberbegriffs des Anspruchs 1. Das Brennstoffeinspritzventil dient dem Einspritzen eines gasförmigen und/oder flüssigen Brennstoffs in einen Brennraum einer Brennkraftmaschine. Derartige Brennstoffeinspritzventile sind auch als Doppelbrennstoffinjektoren oder Dual-Fuel-Injektoren bekannt.

### Stand der Technik

Aus der Patentschrift DE 10 2013 022 260 B3 ist beispielsweise ein Dual-Fuel-Kraftstoffinjektor bekannt, der einen reinen Flüssigkraftstoffbetrieb, als auch einen kombinierten Flüssigkraftstoff-/Gasbetrieb einer Brennkraftmaschine ermöglichen soll. Im kombinierten Flüssigkraftstoff-/Gasbetrieb dient der flüssige Kraftstoff, beispielsweise Dieselkraftstoff, Schweröl oder Bioöl, der Zündung des gasförmigen Kraftstoffs, wobei es sich insbesondere um Erdgas, Methan oder Biogas handeln kann.

Der bekannte Dual-Fuel-Kraftstoffinjektor weist eine erste in einem Düsenkörper aufgenommene axial hubsteuerbare Düsennadel für das Ausbringen von Flüssigkraftstoff über eine erste Düsenanordnung auf. Für das Ausbringen des gasförmigen Kraftstoffs ist eine zweite Düsenanordnung vorgesehen. Um den Dual-Fuel-Kraftstoffinjektor kompakt bauender zu gestalten und dessen Fertigung zu vereinfachen, wird die zweite Düsenanordnung über eine Mehrzahl axial hubgesteuerten zweiten Düsennadeln betätigt, die vorzugsweise konzentrisch um die erste Düsennadel herum im Düsenkörper angeordnet sind.

Ausgehend von dem vorstehend genannten Stand der Technik liegt der vorliegenden Erfindung die Aufgabe zugrunde, ein Brennstoffeinspritzventil zum Einspritzen eines gasförmigen und/oder flüssigen Brennstoffs in einen Brennraum einer Brennkraftmaschine anzugeben, das noch einfacher zu fertigen ist und zudem eine sichere Trennung der unterschiedlichen Brennstoffe gewährleistet.

Zur Lösung der Aufgabe wird das Brennstoffeinspritzventil mit den Merkmalen des Anspruchs 1 angegeben. Vorteilhafte Weiterbildungen der Erfindung sind den Unteransprüchen zu entnehmen.

### Offenbarung der Erfindung

Das zum Einspritzen eines gasförmigen und/oder flüssigen Brennstoffs in einen Brennraum einer Brennkraftmaschine vorgeschlagene Brennstoffeinspritzventil umfasst ein nadelförmiges erstes Einspritzventilglied, das zum Freigeben und Verschließen mindestens einer Einspritzöffnung, über die der flüssige Brennstoff einspritzbar ist, in einer Hochdruckbohrung eines Düsenkörpers hubbeweglich aufgenommen ist. Erfindungsgemäß ist zum Freigeben und Verschließen mindestens einer Einspritzöffnung, über die der gasförmige Brennstoff einspritzbar ist, ein hülsenförmiges zweites Einspritzventilglied vorgesehen, das in einem Ringraum eines Gehäuseteils hubbeweglich aufgenommen ist, das den Düsenkörper umgibt.

Die Hülsenform des zweiten Einspritzventilglieds ermöglicht eine konzentrische bzw. koaxiale Anordnung der beiden Ventilglieder, so dass die Düsenanordnung sehr kompakt bauend ist. Ferner kann das hülsenförmige zweite Einspritzventilglied zum Freigeben und Verschließen einer oder mehrerer Einspritzöffnungen, insbesondere mehrerer kreisförmig angeordneter Einspritzlöcher, eingesetzt werden, so dass nur ein einziges weiteres Einspritzventilglied und keine Mehrzahl an axial hubsteuerbaren Düsennadeln erforderlich ist. Auf diese Weise wird die Fertigung des Brennstoffeinspritzventils deutlich vereinfacht.

Bevorzugt ist der zum Einspritzen des gasförmigen Brennstoffs dienende Teil der Düsenanordnung rotationssymmetrisch um den Düsenkörper gebaut. Dadurch wird die Fertigung weiter vereinfacht. Der Düsenkörper einschließlich der hierin aufgenommenen Komponenten zum Einspritzen des flüssigen Brennstoffs kann im Übrigen wie ein herkömmlicher Flüssigkraftstoffinjektor aufgebaut sein.

Besonders bevorzugt ist das Brennstoffeinspritzventil vollständig rotationssymmetrisch aufgebaut, so dass die Winkellage des Einspritzventils in Bezug auf den Brennraum unerheblich ist.

Die Aufnahme des hülsenförmigen zweiten Einspritzventilglieds in einem separaten Gehäuseteil der Düsenanordnung stellt zudem eine fluiddichte Trennung der unterschiedlichen Brennstoffe sicher. Dies gilt insbesondere, da die Aufnahme des hülsenförmigen zweiten Einspritzventilglieds in einem Ringraum erfolgt, der zumindest über den Düsenkörper vom flüssigen Brennstoff führenden Hochdruckraum getrennt ist. Eine unerwünschte gegenseitige Beeinflussung der beiden Einspritzventilglieder ist damit ebenfalls weitgehend ausgeschlossen.

Gemäß einer bevorzugten Ausführungsform der Erfindung weist das hülsenförmige zweite Einspritzventilglied eine ringförmige Dichtkontur auf, die mit einem im Gehäuseteil ausgebildeten ringförmigen Dichtsitz zusammenwirkt. Über die ringförmige Dichtkontur und den ringförmigen Dichtsitz können gleich mehrere Einspritzöffnungen, beispielsweise mehrere im Bereich des Dichtsitzes kreisförmig angeordnete runde oder schlitzartige Einspritzlöcher, freigegeben oder verschlossen werden. Die Einspritzöffnung kann aber auch als umlaufender Ringspalt ausgebildet sein.

Der ringförmige Dichtsitz ist vorzugsweise als eine umlaufende Ringnut ausgebildet, in deren Bodenbereich die mindestens eine Einspritzöffnung ausgebildet ist. Der Querschnitt der Ringnut kann beliebig gewählt werden, solange sichergestellt ist, dass die am hülsenförmigen Einspritzventilglied ausgebildete Dichtkontur die Einspritzöffnung abdeckt. Der Querschnitt der Ringnut kann rund oder eckig, insbesondere trapezförmig oder dreieckig, gewählt werden. Die mit dem ringförmigen Dichtsitz zusammenwirkende ringförmige Dichtkontur wird vorzugsweise durch eine ringförmige Stirnfläche des hülsenförmigen zweiten Einspritzventilglieds gebildet, die im Querschnitt ballig geformt ist.

Des Weiteren wird vorgeschlagen, dass das hülsenförmige zweite Einspritzventilglied an seinem dem Brennraum abgewandten Ende mit einem ringförmigen Anker gekoppelt ist, an dem eine Feder abgestützt ist. Die Abstützung der Feder erfolgt dabei bevorzugt auf der Seite des Ankers, die dem Einspritzventilglied abgewandt ist, so dass die Federkraft der Feder in Schließrichtung wirkt. Die Feder kann beispielsweise als einfache Schraubenfeder ausgebildet sein, so dass in ihrem Zentrum der Düsenkörper zu liegen kommen kann. Zur Zentrierung und/oder Führung der Feder kann zudem stirnseitig im Anker eine Ringnut ausgebildet sein, in welcher die Feder abschnittsweise aufgenommen ist.

Der Anker kann gemeinsam mit dem hülsenförmigen Einspritzventilglied im Ringraum des den Düsenkörper umgebenden Gehäuseteils angeordnet oder in einem Ankerraum aufgenommen sein, der mit dem Ringraum verbunden bzw. verbindbar ist. Denn in Weiterbildung der Erfindung wird vorgeschlagen, dass der Anker eine mit einem weiteren ringförmigen Dichtsitz zusammenwirkende Stirnfläche zur fluiddichten Trennung des Ankerraums gegenüber dem Ringraum besitzt. Der weitere ringförmige Dichtsitz soll bei geschlossenem ersten Dichtsitz eine unerwünschte Leckage des gasförmigen Brennstoffs verhindern. Die mit dem weiteren ringförmigen Dichtsitz zusammenwirkende Stirnfläche des Ankers ist hierzu derart ausgebildet, dass sie das hülsenförmige zweite Einspritzventilglied sowohl radial innen als auch radial außen überragt. Es handelt sich hierbei um die Stirnfläche, die dem hülsenförmigen Einspritzventilglied zugewandt bzw. der am Anker abgestützten Feder abgewandt ist.

Vorteilhafterweise wird der weitere ringförmige Dichtsitz durch zwei konzentrisch angeordnete Elastomer-Dichtringe ausgebildet. Durch die Verwendung eines elastomeren Werkstoffs kann die Dichtigkeit im Bereich des Dichtsitzes weiter erhöht werden. Den hohen Brennraumtemperaturen sind die beiden Elastomer-Dichtringe nicht ausgesetzt, da die Lage des weiteren ringförmigen Dichtsitzes vom Brennraum zurückversetzt ist.

Die beiden den weiteren Dichtsitz ausbildenden Elastomer-Dichtringe sind in einem radialen Abstand zueinander angeordnet, so dass sie beidseits des hülsenförmigen Einspritzventilglieds zu liegen kommen. Die axiale Abstützung der beiden Elastomer-Dichtringe kann über das Gehäuseteil erfolgen.

Vorteilhafterweise sind die beiden Elastomer-Dichtringe jedoch an zwei konzentrisch angeordneten Einstellringen abgestützt sind, die in der Weise in das Gehäuseteil eingesetzt sind, dass sie den das hülsenförmige Einspritzventilglied aufnehmenden Ringraum in radialer Richtung begrenzen. Über die Einstellringe kann die Lage des weiteren Dichtsitzes in Bezug auf den ersten Dichtsitz eingestellt werden, und zwar bevorzugt in der Weise, dass der erste Dichtsitz den unteren Hubanschlag des Ankers ausbildet und der weitere Dichtsitz keine Endlage des Ankers definiert, sondern lediglich eine zusätzliche Abdichtung bewirkt. Darüber hinaus kann über die den Ringraum begrenzenden Einstellringe eine Führung des hülsenförmigen Einspritzventilglieds bewirkt werden.

Ferner wird vorgeschlagen, dass im Gehäuseteil eine ringförmige Magnetspule zur Einwirkung auf den Anker aufgenommen ist. Die Magnetspule ist vorzugsweise radial außen in Bezug auf den Anker angeordnet, so dass der Anker bei einer Bestromung der Magnetspule entgegen der Federkraft der Feder in den von der ringförmigen Magnetspule umschlossenen Hohlraum eintaucht. Auf diese Weise können große Hübe realisiert werden, zugleich bleibt das Brennstoffeinspritzventil in axialer Richtung kompakt bauend. Um den elektrischen Anschluss der Magnetspule zu erleichtern, wird darüber hinaus vorgeschlagen, dass die Magnetspule vom Ankerraum mittels eines nichtmagnetischen Dichtrings fluiddicht getrennt ist.

Des Weiteren bevorzugt ist in das Gehäuseteil ein ringförmiger Innenpolkörper eingesetzt, in dem mindestens ein Zuführkanal für den gasförmigen Brennstoff ausgebildet ist. Über den Innenpolkörper kann der Ankerraum nach außen abgedichtet werden. Zugleich kann der Innenpolkörper als oberer Hubanschlag für den Anker genutzt werden.

Um die gewünschte Abdichtung über den Innenpolkörper zu erreichen, wird vorgeschlagen, dass der Innenpolkörper mit dem Gehäuseteil und/oder dem Düsenkörper fest verbunden ist. Die Verbindung ist daher vorzugsweise über eine Schweißverbindung bzw. eine umlaufende Schweißnaht hergestellt. Alternativ kann die feste Verbindung auch über eine Schraubverbindung realisiert werden.

Bevorzugt sind auch der Düsenkörper und das Gehäuseteil fest miteinander verbunden. Die Verbindung kann wiederum über eine Schraubverbindung oder eine Schweißverbindung bewirkt hergestellt sein.

Alternativ oder ergänzend können der Düsenkörper und das Gehäuseteil mittels einer Spannmutter miteinander verspannt sein. Das Verspannen der Bauteile besitzt den Vorteil, dass hohe Systemdrücke zulässig sind.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Brennstoffeinspritzventil gemäß einer ersten bevorzugten Ausführungsform und
Fig. 2 einen schematischen Längsschnitt durch ein erfindungsgemäßes Brennstoffeinspritzventil gemäß einer zweiten bevorzugten Ausführungsform.

### Ausführliche Beschreibung der Zeichnungen

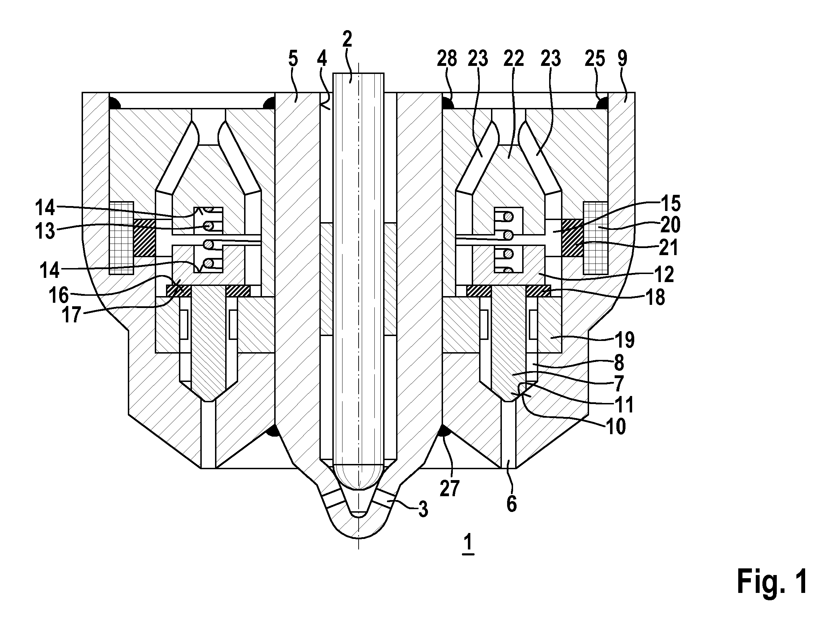

Der Fig. 1 ist ein Brennstoffeinspritzventil zum Einspritzen eines gasförmigen und/oder flüssigen Brennstoffs zu entnehmen. Zum Einspritzen des flüssigen Brennstoffs, beispielsweise Dieselkraftstoff, weist das Brennstoffeinspritzventil einen zentral angeordneten Düsenkörper 5 und ein nadelförmiges Einspritzventilglied 2 auf, das in einer Hochdruckbohrung 4 des Düsenkörpers 5 hubbeweglich aufgenommen ist. Über die Hubbewegung des nadelförmigen Einspritzventilglieds 2 sind mehrere Einspritzöffnungen 3 freigebbar und verschließbar, die im Düsenkörper 5 ausgebildet sind und dem Einbringen des flüssigen Brennstoffs in einen Brennraum 1 dienen.

Der zentral angeordnete Düsenkörper 5 ist von einem Gehäuseteil 9 umgeben, in dem ein Ringraum 8 zur hubbeweglichen Aufnahme eines weiteren Einspritzventilglieds 7 ausgebildet ist. Die Hubbewegung des weiteren Einspritzventilglieds 7 dient dem Freigeben und Verschließen weiterer Einspritzöffnungen 6, die als kreisförmig angeordnete Spritzlöcher im Gehäuseteil 9 ausgebildet sind und dem Einspritzen des gasförmigen Brennstoffs dienen. Das weitere Einspritzventilglied 7 ist hierzu hülsenförmig ausgeführt und weist stirnseitig eine ringförmige Dichtkontur 10 auf, die mit einem im Gehäuseteil 9 ausgebildeten ringförmigen Dichtsitz 11 zusammenwirkt, der die Einspritzöffnungen 6 umschließt.

Das hülsenförmige Einspritzventilglied 7 ist an seinem dem Brennraum 1 abgewandten Ende mit einem Anker 12 verbunden, der eine Stirnfläche 17 besitzt, die das Einspritzventilglied 7 sowohl radial innen als auch radial außen überragt. Die Stirnfläche 17 bilden auf diese Weise eine Dichtkontur aus, die zur fluiddichten Trennung des Ringraums 8 von einem Ankerraum 15 mit einem Dichtsitz 16 zusammenwirkt, wenn sich das hülsenförmige Einspritzventilglied in Schließposition befindet. Dadurch ist sichergestellt, dass in geschlossenem Zustand kein Gas entweichen kann.

Der weitere Dichtsitz 16 ist gegenüber dem Brennraum 1 deutlich zurückgesetzt und demzufolge auch nicht den hohen Brennraumtemperaturen ausgesetzt. Der weitere Dichtsitz 16 kann daher - wie vorliegend dargestellt - aus zwei konzentrisch angeordneten Elastomer-Dichtringen 18 gebildet werden. Der elastomere Werkstoff verbessert die Dichtwirkung.

Die beiden Elastomer-Dichtringe 18 sind an zwei konzentrisch angeordneten Einstellringen 19 abgestützt, über die der axiale Abstand der beiden Dichtsitze 11, 16 zueinander einstellbar ist. Während der Dichtsitz 11 als unterer Hubanschlag für den Anker 12 dient, soll der weitere Dichtsitz 16 lediglich dichten. Da die Einstellringe 19 den Ringraum 8 begrenzen, kann zugleich eine Führung des hülsenförmigen Einspritzventilglieds 7 über die Einstellringe 19 bewirkt werden.

Während der Dichtsitz 11 als unterer Hubanschlag für den Anker 12 dient, wird der obere Hubanschlag durch einen ringförmigen Innenpolkörper 22 ausgebildet, der in das Gehäuseteil 9 eingesetzt und mit diesem über eine Schweißverbindung 25 fest verbunden ist. Um die Zufuhr des gasförmigen Brennstoffs in Richtung der Einspritzöffnungen 6 zu gewährleisten, sind im Innenpolkörper 22 Zuführkanäle 23 ausgebildet, die in den Ankerraum 15 münden. Am Innenpolkörper 22 ist eine Feder 13 abgestützt, deren Federkraft den Anker 12 und das hülsenförmige Einspritzventilglied 7 in Schließrichtung beaufschlagt. Die beiden Enden der Feder 13 sind in sich gegenüber liegenden Ringnuten 14 des Ankers 12 und des Innenpolkörpers 22 aufgenommen, so dass die Feder zentriert und geführt ist.

Um das Einspritzventilglied 7 entgegen der Federkraft der Feder 13 zu öffnen, ist eine Magnetspule 20 vorgesehen, die radial außen in Bezug auf den Anker 12 bzw. den Ankerraum 15 angeordnet und vom Ankerraum 15 mittels eines nichtmagnetischen Dichtrings 21 fluiddicht getrennt ist.

Wird die Magnetspule 20 bestromt, bewegt sich der Anker 12 einschließlich des Einspritzventilglieds 7 entgegen der Federkraft der Feder 13 nach oben und gasförmiger Brennstoff gelangt über die Zuführkanäle 23, den Ankerraum 15, den Ringraum 8 und den Einspritzöffnungen 6 in den Brennraum 1. Zum Schließen des Einspritzventilglieds 7 wird die Bestromung der Magnetspule 20 wieder beendet, so dass die Federkraft der Feder 13 den Anker 12 und das Einspritzventilglied 7 in die Ausgangslage zurückstellt.

Um den gasförmigen Brennstoff im Brennraum 1 zu zünden, wird flüssiger Brennstoff, insbesondere Dieselkraftstoff, benötigt. Dieser wird über die im Düsenkörper 5 ausgebildeten Einspritzöffnungen 3 in den Brennraum 1 eingespritzt. Die zum Freigeben der Einspritzöffnungen 3 erforderliche Hubbewegung des Einspritzventilglieds 2 kann ebenfalls elektromagnetisch bewirkt werden. Die hierzu erforderliche Aktorik ist in der Fig. 1 nicht dargestellt.

Um die Lage des Düsenkörpers 5 gegenüber dem Gehäuseteil 9 zu fixieren, sind vorliegend beide Teile über eine Schweißverbindung 27 miteinander verbunden. Eine weitere Schweißnaht 28 kann zur Verbindung des Innenpolkörpers 22 mit dem Düsenkörper 5 vorgesehen sein.

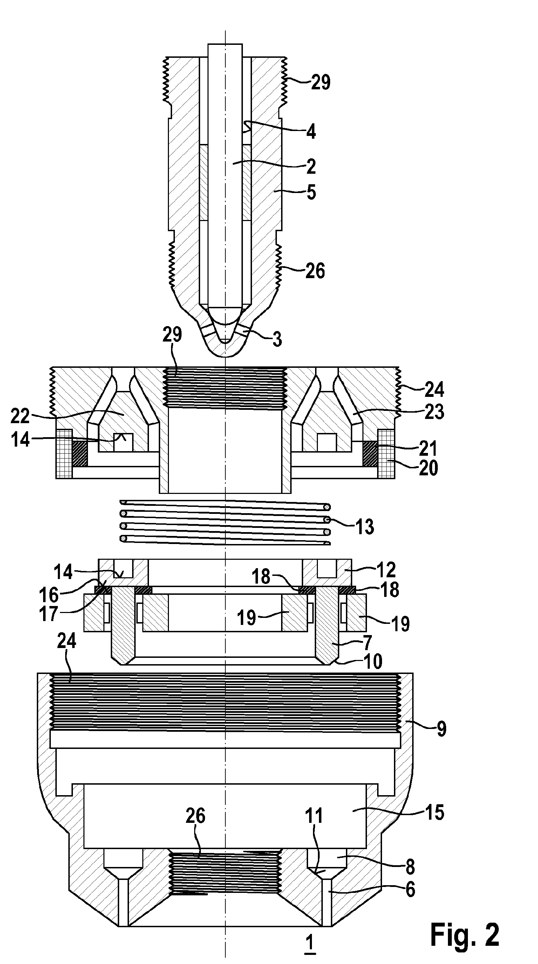

Der Fig. 2 ist eine Abwandlung der Ausführungsform der Fig. 1 zu entnehmen. Abweichend von der Fig. 1 sind zudem die Teile der Düsenanordnung, die dem Einspritzen des gasförmigen Brennstoffs dienen, in einer Explosionsdarstellung gezeigt.

Bei der Ausführungsform der Fig. 2 werden das Gehäuseteil 9 und der Düsenkörper 5 miteinander verschraubt. Die Verbindung wird demnach durch eine Schraubverbindung 26 hergestellt. Gleiches gilt für die Verbindung des Innenpolkörpers 22 mit dem Gehäuseteil 9 und dem Düsenkörper 5. Hier ist eine Schraubverbindung 24 bzw. eine Schraubverbindung 29 vorgesehen.

## Patentansprüche

1. Brennstoffeinspritzventil zum Einspritzen eines gasförmigen und/oder flüssigen Brennstoffs in einen Brennraum (1) einer Brennkraftmaschine, umfassend ein nadelförmiges erstes Einspritzventilglied (2), das zum Freigeben und Verschließen mindestens einer Einspritzöffnung (3), über die der flüssige Brennstoff einspritzbar ist, in einer Hochdruckbohrung (4) eines Düsenkörpers (5) hubbeweglich aufgenommen ist, **dadurch gekennzeichnet, dass** zum Freigeben und Verschließen mindestens einer Einspritzöffnung (6), über die der gasförmige Brennstoff einspritzbar ist, ein hülsenförmiges zweites Einspritzventilglied (7) vorgesehen ist, das in einem Ringraum (8) eines Gehäuseteils (9) hubbeweglich aufgenommen ist, das den Düsenkörper (5) umgibt.

2. Brennstoffeinspritzventil nach Anspruch 1,
**dadurch gekennzeichnet, dass** das hülsenförmige zweite Einspritzventilglied (7) eine ringförmige Dichtkontur (10) aufweist, die mit einem im Gehäuseteil (9) ausgebildeten ringförmigen Dichtsitz (11) zusammenwirkt.

3. Brennstoffeinspritzventil nach Anspruch 1 oder 2,
**dadurch gekennzeichnet, dass** das hülsenförmige zweite Einspritzventilglied (7) an seinem dem Brennraum (1) abgewandten Ende mit einem ringförmigen Anker (12) gekoppelt ist, an dem eine Feder (13) abgestützt ist, wobei vorzugsweise stirnseitig im Anker (12) eine Ringnut (14) zur Zentrierung und/oder Führung der Feder (13) ausgebildet ist.

4. Brennstoffeinspritzventil nach Anspruch 3,
**dadurch gekennzeichnet, dass** der Anker (12) in einem Ankerraum (15) aufgenommen ist und zur fluiddichten Trennung des Ankerraums (15) gegenüber dem Ringraum (8) eine mit einem weiteren ringförmigen Dichtsitz (16) zusammenwirkende Stirnfläche (17) besitzt, die das hülsenförmige zweite Einspritzventilglied (7) sowohl radial innen als auch radial außen überragt.

5. Brennstoffeinspritzventil nach Anspruch 4,
**dadurch gekennzeichnet, dass** der ringförmige weitere Dichtsitz (16) durch zwei konzentrisch angeordnete Elastomer-Dichtringe (18) ausgebildet wird, die vorzugsweise an zwei konzentrisch angeordneten Einstellringen (19) abgestützt sind, die in das Gehäuseteil (9) eingesetzt sind und den Ringraum (8) in radialer Richtung begrenzen.

6. Brennstoffeinspritzventil nach einem der Ansprüche 3 bis 5,
**dadurch gekennzeichnet, dass** zur Einwirkung auf den Anker (12) eine ringförmige Magnetspule (20) im Gehäuseteil (9) aufgenommen ist, die vorzugsweise radial außen in Bezug auf den Anker (12) angeordnet ist und weiterhin vorzugsweise vom Ankerraum (15) mittels eines nichtmagnetischen Dichtrings (21) fluiddicht getrennt ist.

7. Brennstoffeinspritzventil nach einem der vorhergehenden Ansprüche,
**dadurch gekennzeichnet, dass** in das Gehäuseteil (9) ein ringförmiger Innenpolkörper (22) eingesetzt ist, in dem mindestens ein Zuführkanal (23) für den gasförmigen Brennstoff ausgebildet ist.

8. Brennstoffeinspritzventil nach Anspruch 7,
**dadurch gekennzeichnet, dass** der Innenpolkörper (22) mit dem Gehäuseteil (9) und/oder dem Düsenkörper (5) fest verbunden ist, wobei vorzugsweise die Verbindung über eine Schraubverbindung (24) und/oder Schweißverbindung (25) hergestellt ist.

9. Brennstoffeinspritzventil nach einem der vorhergehenden Ansprüche,
**dadurch gekennzeichnet, dass** der Düsenkörper (5) und das Gehäuseteil (9) fest verbunden sind, wobei vorzugsweise die Verbindung über eine Schraubverbindung (26) oder Schweißverbindung (27) hergestellt ist.

10. Brennstoffeinspritzventil nach einem der vorhergehenden Ansprüche,
**dadurch gekennzeichnet, dass** der Düsenkörper (5) und das Gehäuseteil (9) mittels einer Spannmutter miteinander verspannt sind.
